# EUROPEAN PATENT APPLICATION

(11) **EP 4 799 839 A1**
(43) Date of publication of application: **02.09.2026**
(21) Application number: 24895429.9
(22) Date of filing: 14.05.2024
(51) Int. Cl.: B60K 1/04

(54) **UNDERBODY, VEHICLE BODY STRUCTURE, AND VEHICLE**

(30) Priority: 30.11.2023 CN 202311632457
(71) Applicant: Contemporary Amperex Intelligence Technology (Shanghai) Limited, Shanghai 201306 (CN)
(72) Inventor: ZHANG, Jian, Shanghai 201306 (CN); HE, Bin, Shanghai 201306 (CN); ZHAO, Hua, Shanghai 201306 (CN); ZHU, Zhanming, Shanghai 201306 (CN)
(74) Representative: Gong, Jinping
(86) International application number: PCT/CN2024/093203
(87) International publication number: WO 2025/112318

(57) **Abstract**

An underbody (20), a vehicle body structure (100), and a vehicle (1000) are provided. The underbody (20) includes: a front cabin assembly (21), a battery assembly (22), and a rear cabin assembly (23), where the front cabin assembly (21) is provided with a first connecting portion (211) and a first upper vehicle body connecting portion that are spaced apart from each other, the rear cabin assembly (23) is provided with a second connecting portion (231) and a second upper vehicle body connecting portion that are spaced apart from each other, the front cabin assembly (21), the rear cabin assembly (23), and the battery assembly (22) are configured such that the front cabin assembly (21) and the rear cabin assembly (23) are detachably connected to the battery assembly (22) by means of the first connecting portion (211) and the second connecting portion (231), and the battery assembly (22) is allowed to be independently detached in a manner away from an upper vehicle body (10).

## Description

### CROSS-REFERENCE TO RELATED APPLICATIONS

The present application claims priority to Chinese Patent Application No. 202311632457.X filed on November 30, 2023 by Contemporary Amperex Technology (Shanghai) Limited and entitled "UNDERBODY, VEHICLE BODY STRUCTURE, AND VEHICLE", which is incorporated herein by reference in its entirety.

### TECHNICAL FIELD

The present application relates to the technical field of vehicles, and in particular to an underbody, a vehicle body structure, and a vehicle.

### BACKGROUND

Cell-to-Chassis technology (that is, CTC technology), which integrates the battery pack with the chassis, has become a key technical field for research and development to improve efficiency and reduce costs. However, the integrated design complicates the disassembly and assembly operations of the battery pack, which hinders after-sales maintenance.

### SUMMARY

In view of the above problems, the present application provides an underbody, a vehicle body structure, and a vehicle, which facilitate maintenance and replacement of the battery assembly.

According to a first aspect, an embodiment of the present application provides an underbody, where the underbody includes a front cabin assembly, a battery assembly, and a rear cabin assembly, where the front cabin assembly is provided with a first connecting portion and a first upper vehicle body connecting portion that are spaced apart from each other, the rear cabin assembly is provided with a second connecting portion and a second upper vehicle body connecting portion that are spaced apart from each other, the front cabin assembly, the rear cabin assembly and the battery assembly are configured such that the front cabin assembly and the rear cabin assembly are detachably connected to the battery assembly by means of the first connecting portion and the second connecting portion, and the battery assembly is allowed to be independently detached in a manner away from an upper vehicle body.

In the technical solution of the embodiments of the present application, by configuring the underbody to include the front cabin assembly, the battery assembly, and the rear cabin assembly, the battery assembly is integrated into the underbody, which helps to reduce the number of parts and reduce the total weight of the underbody, and by configuring the battery assembly to be independently detachable relative to the front cabin assembly and the rear cabin assembly, the battery assembly is allowed to be independently detached in a manner away from the upper vehicle body. Therefore, when the battery assembly needs maintenance and replacement, the battery assembly can be independently detached for maintenance and replacement without disassembling the upper vehicle body, thereby improving the convenience of disassembly and assembly, which helps to improve the efficiency of replacement and maintenance and improve the user experience.

In some embodiments, the first connecting portion includes front side portion fixing portions and a front top portion fixing portion, where left and right sides of the front top portion fixing portion are each provided with the front side portion fixing portion, the front side portion fixing portions are detachably connected to the battery assembly, and the front top portion fixing portion is detachably connected to the battery assembly.

In the above technical solution, by configuring the first connecting portion to include the front side portion fixing portions and the front top portion fixing portion, when the first connecting portion is connected to the battery assembly, the front side portion fixing portions and the front top portion fixing portion may be respectively detachably connected to the battery assembly, thereby enhancing the connection area between the front cabin assembly and the battery assembly, so as to enhance the connection stability between the front cabin assembly and the battery assembly.

In some embodiments, a first portion of the front side portion fixing portion is located on an inner side of the battery assembly; and the underbody further includes a first fastener and a second fastener, where the first fastener passes through the battery assembly and is fixed to the first portion, and the second fastener passes through the first portion and is fixed to the battery assembly.

In the above technical solution, by configuring the first portion of the front side portion fixing portion to be located on the inner side of the battery assembly, the battery assembly is located on the outer side of the first portion, that is, the front side portion fixing portion and the battery assembly are distributed in the left-right direction of the vehicle. In this way, when the battery assembly needs maintenance and replacement, after the connection structure of the battery assembly is released, the battery assembly can directly move on the outer side of the first portion to separate from the first portion, so as to avoid interference between the disassembly movement of the first portion and the battery assembly.

The first fastener passes through the battery assembly and is fixed to the first portion, and the second fastener passes through the first portion and is fixed to the battery assembly, that is, the first fastener is substantially inserted from outside to inside along the left-right direction to achieve the connection between the first portion and the battery assembly, and the second fastener is substantially inserted from inside to outside along the left-right direction to achieve fixing between the first portion and the battery assembly, thereby enhancing the connection stability between the first portion and the battery assembly while preventing the upper vehicle body from shielding the fastening positions of the first fastener or the second fastener, so as to improve the convenience of disassembly and assembly of the battery assembly and the first portion.

In some embodiments, the first fastener is provided in plural, a portion of the first fasteners are spaced apart along a first direction, another portion of the first fasteners are spaced apart along a second direction, and the first direction and the second direction form an included angle.

In the above technical solution, by configuring a portion of the first fasteners and another portion of the first fasteners to be spaced apart along different directions, the plurality of first fasteners can fix the first portion and the battery assembly in two directions, thereby enhancing the connection strength between the first portion and the battery assembly, and further enhancing the connection stability thereof.

In some embodiments, a second portion of the front side portion fixing portion is located above the battery assembly; and the underbody further includes a third fastener, where the third fastener sequentially passes through the second portion and is fixed to the battery assembly.

In the above technical solution, by configuring the second portion of the front side portion fixing portion to be located above the battery assembly, when the battery assembly needs maintenance and replacement, after the connection structure of the battery assembly is released, the battery assembly can directly move downward below the second portion to separate from the second portion, so as to avoid interference between the disassembly movement of the second portion and the battery assembly. The third fastener passes through the second portion and is fixed to the battery assembly, that is, the fixing direction of the third fastener is approximately an up-down direction, thereby enhancing the connection stability between the second portion and the battery assembly in the up-down direction.

In some embodiments, the front top portion fixing portion is located above the battery assembly; and the underbody further includes a fourth fastener, where the fourth fastener passes through the front top portion fixing portion and is fixed to the battery assembly.

In the above technical solution, by configuring the front top portion fixing portion to be located above the battery assembly, when the battery assembly needs maintenance and replacement, after the connection structure of the battery assembly is released, the battery assembly can directly move downward below the front top portion fixing portion to separate from the front top portion fixing portion, so as to avoid interference between the disassembly movement of the front top portion fixing portion and the battery assembly. The fourth fastener passes through the front top portion fixing portion and is fixed to the battery assembly, that is, the fixing direction of the fourth fastener is approximately the up-down direction, thereby enhancing the connection stability between the front top portion fixing portion and the battery assembly in the up-down direction.

In some embodiments, the second connecting portion includes a rear side portion fixing portion, where the rear side portion fixing portion includes a third portion and a fourth portion, the third portion is located above the fourth portion, and both the third portion and the fourth portion are located above the battery assembly; and the underbody further includes a plurality of fifth fasteners, where a portion of the fifth fasteners pass through the third portion and are fixed to the battery assembly, and another portion of the fifth fasteners pass through the fourth portion and are fixed to the battery assembly.

In the above technical solution, by configuring both the third portion and the fourth portion to be located above the battery assembly, when the battery assembly needs maintenance and replacement, after the connection structure of the battery assembly is released, the battery assembly can directly move downward below the third portion and the fourth portion to separate from the third portion and the fourth portion, so as to avoid interference between the disassembly movement of the third portion and the fourth portion and the battery assembly.

A portion of the fifth fasteners and another portion of the fifth fasteners respectively pass through the third portion and the fourth portion and are fixed to the battery assembly, and the third portion is located above the fourth portion, such that the plurality of fifth fasteners can fix the rear side portion fixing portion and the battery assembly at two heights, thereby enhancing the connection strength between the rear side portion fixing portion and the battery assembly, and further enhancing the connection stability thereof.

In some embodiments, the rear side portion fixing portion further includes a fifth portion, where the fifth portion is located on an inner side of the battery assembly; and the underbody further includes a sixth fastener, where the sixth fastener passes through the fifth portion and is fixed to the battery assembly.

In the above technical solution, by configuring the fifth portion on the inner side of the battery assembly, the battery assembly is located on the outer side of the fifth portion, that is, the fifth portion and the battery assembly are distributed in the left-right direction of the vehicle. In this way when the battery assembly needs maintenance and replacement, after the connection structure of the battery assembly is released, the battery assembly can directly move on the outer side of the fifth portion to separate from the fifth portion, so as to avoid interference between the disassembly movement of the fifth portion and the battery assembly. The sixth fastener passes through the fifth portion and is fixed to the battery assembly, that is, the sixth fastener is substantially inserted from inside to outside along the left-right direction to achieve fixing between the fifth portion and the battery assembly, thereby enhancing the connection stability between the fifth portion and the battery assembly in the left-right direction while avoiding the upper vehicle body from shielding the fastening position of the sixth fastener, so as to improve the convenience of disassembly and assembly of the battery assembly and the fifth portion.

In some embodiments, the second connecting portion further includes a rear top portion fixing portion, where the rear side portion fixing portion is provided on each of two sides of the rear top portion fixing portion; the rear top portion fixing portion is located above the battery assembly; and the underbody further includes a seventh fastener, where the seventh fastener passes through the rear top portion fixing portion and is fixed to the battery assembly.

In the above technical solution, by configuring the rear top portion fixing portion to be located above the battery assembly, the battery assembly is located below the rear top portion fixing portion, that is, the rear top portion fixing portion and the battery assembly are distributed in the up-down direction of the vehicle. In this way, when the battery assembly needs maintenance and replacement, after the connection structure of the battery assembly is released, the battery assembly can directly move downward below the rear top portion fixing portion to separate from the rear top portion fixing portion, so as to avoid interference between the disassembly movement of the rear top portion fixing portion and the battery assembly. The seventh fastener passes through the rear top portion fixing portion and is fixed to the battery assembly, that is, the seventh fastener is substantially inserted from top to bottom along the up-down direction to achieve fixing between the rear top portion fixing portion and the battery assembly, thereby enhancing the connection stability between the rear top portion fixing portion and the battery assembly in the up-down direction while avoiding the upper vehicle body from shielding the fastening position of the seventh fastener, so as to improve the convenience of disassembly and assembly of the battery assembly and the rear top portion fixing portion.

In some embodiments, the underbody further includes a first seal and a second seal, where the first seal seals a gap between the front cabin assembly and the battery assembly, and the second seal seals a gap between the rear cabin assembly and the battery assembly.

In the above technical solution, the provision of the first seal can improve the sealing between the front cabin assembly and the battery assembly, and the provision of the second seal can improve the sealing between the rear cabin assembly and the battery assembly.

In some embodiments, the first seal and/or the second seal is an adhesive member, and the adhesive member is configured to cooperate with the battery assembly.

In the above technical solution, the first seal is an adhesive member, which can enhance the connection reliability between the front cabin assembly and the battery assembly while ensuring the sealing performance at the connection between the front cabin assembly and the battery assembly, and/or the second seal is an adhesive member, which can enhance the connection reliability between the rear cabin assembly and the battery assembly while ensuring the sealing performance at the connection between the rear cabin assembly and the battery assembly. Further the structure is simpler, which facilitates cost reduction.

In some embodiments, the battery assembly includes a case and battery cells disposed in the case, where the case includes a sill beam, and the front cabin assembly, the rear cabin assembly and the upper vehicle body are both detachably connected to the case.

In the above technical solution, the case can provide shielding and protection for the battery cells. The case includes a sill beam, and the front cabin assembly, the rear cabin assembly, and the upper vehicle body are separately detachably connected to the case, such that the case serving as the vehicle body floor is integrated with the front cabin assembly and the rear cabin assembly to form the underbody, thereby achieving the design of integrating the case into the underbody.

According to a second aspect, the present application provides a vehicle body structure, including an upper vehicle body and an underbody, where the underbody is the underbody according to any one of the above embodiments, and the upper vehicle body avoids the first connecting portion and the second connecting portion.

In some embodiments, the vehicle body structure further includes a third seal, where the third seal seals a gap between the battery assembly and the upper vehicle body.

In the above technical solution, by configuring the third seal, the sealing at the connection between the upper vehicle body and the battery assembly can be improved.

In some embodiments, in a left-right direction, a portion of the battery assembly is detachably connected to the upper vehicle body.

In the above technical solution, by configuring a portion of the battery assembly to be detachably connected to the upper vehicle body in the left-right direction, during assembly and disassembly of the battery assembly, the upper vehicle body can be avoided from obstructing the disassembly process of the battery assembly, and interference with the front cabin assembly or the rear cabin assembly can be avoided, so as to reduce the difficulty of assembling and disassembling the battery assembly.

In some embodiments, in a left-right direction, a portion of the battery assembly is detachably connected to the front cabin assembly, and a portion of the battery assembly is detachably connected to the rear cabin assembly.

In the above technical solution, by configuring a portion of the battery assembly to be detachably connected to the front cabin assembly in the left-right direction and a portion to be detachably connected to the rear cabin assembly, during assembly and disassembly of the battery assembly, the front cabin assembly and the rear cabin assembly can be avoided from obstructing the disassembly process of the battery assembly, and interference with the upper vehicle body can be avoided, so as to reduce the difficulty of assembling and disassembling the battery assembly.

According to a third aspect, the present application provides a vehicle, including the vehicle body structure according to any one of the above embodiments.

The above description is merely an overview of the technical solutions of the present application. In order to more clearly understand the technical means of the present application and to implement them in accordance with the contents of the specification, and in order to make the above and other objects, features and advantages of the present application more obvious and easy to understand, the specific embodiments of the present application are illustrated below.

### BRIEF DESCRIPTION OF DRAWINGS

By reading the detailed description of the preferred embodiments below, various other advantages and benefits will become clear to those of ordinary skill in the art. The accompanying drawings are only for the purpose of illustrating the preferred embodiments and are not construed to limit the present application. Moreover, the same reference numerals are used to represent the same components throughout the drawings. In the drawings:
FIG. 1 is a schematic structural diagram of a vehicle according to some embodiments of the present application;
FIG. 2 is a schematic diagram of a vehicle body structure according to some embodiments of the present application;
FIG. 3 is an exploded structural schematic view of a vehicle body structure according to some embodiments of the present application;
FIG. 4 is an exploded structural schematic view of an underbody according to some embodiments of the present application;
FIG. 5 is an enlarged view at A in FIG. 2;
FIG. 6 is an enlarged view at B in FIG. 2;
FIG. 7 is an enlarged view at E in FIG. 3;
FIG. 8 is an enlarged view at C in FIG. 2; and
FIG. 9 is an enlarged view at D in FIG. 2.

### Reference signs in the drawings:

vehicle 1000; front-rear direction X of vehicle; left-right direction Y of vehicle; up-down direction Z of vehicle;
vehicle body structure 100; controller 200; motor 300;
upper vehicle body 10; underbody 20; front cabin assembly 21; first connecting portion 211; front side portion fixing portion 2111; first portion 21111; first direction L1; second direction L2; second portion 21112; front top portion fixing portion 2112; battery assembly 22; case 221; sill beam 222; rear cabin assembly 23; second connecting portion 231; rear side portion fixing portion 2311; third portion 23111; fourth portion 23112; fifth portion 23113; rear top portion fixing portion 2312; first fastener 31; second fastener 32; third fastener 33; fourth fastener 34; fifth fastener 35; sixth fastener 36; seventh fastener 37; first seal 41; second seal 42; and third seal 43.

### DESCRIPTION OF EMBODIMENTS

The embodiments of the technical solutions of the present application will be described in detail below with reference to the accompanying drawings. The following embodiments are only used to more clearly illustrate the technical solutions of the present application and are therefore used as examples only, and cannot be used to limit the protection scope of the present application.

Unless otherwise defined, all technical and scientific terms used herein have the same meaning as commonly understood by one of ordinary skill in the art to which this application belongs; the terms used herein are only for the purpose of describing specific embodiments and are not intended to limit the present application; and the terms "including" and "having" and any variations thereof in the specification and claims of the present application and the above description of the accompanying drawings are intended to cover non-exclusive inclusions.

In the description of the embodiments of the present application, the technical terms "first", "second", and the like are only used to distinguish different objects and should not be understood as indicating or implying relative importance or implicitly indicating the number, specific order or primary and secondary relationship of the indicated technical features. In the description of the embodiments of the present application, the meaning of "plural" is two or more, unless otherwise clearly and specifically limited.

As used herein, "embodiment" means that a particular feature, structure, or characteristic described in connection with the embodiment can be included in at least one embodiment of the present application. The phrase appearing in various places in the specification does not necessarily refer to the same embodiment, nor is it an independent or alternative embodiment that is mutually exclusive from other embodiments. Those of ordinary skill in the art will explicitly and implicitly understand that the embodiments described herein can be combined with other embodiments.

In the description of the embodiments of the present application, the term "and/or" is merely an association describing associated objects, indicating that three relationships can exist, for example, A and/or B may indicate: A exists alone, A and B exist simultaneously, and B exists alone. In addition, the character "/" in this text generally indicates that the preceding and following associated objects are in an "or" relationship.

In the description of the embodiments of the present application, the term "plural" refers to two or more (including two), similarly, "plural groups" refers to two or more groups (including two groups), and "plural pieces" refers to two or more pieces (including two pieces).

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on the orientation or positional relationship shown in the accompanying drawings, which is only for the convenience of describing the embodiments of the present application and simplifying the description, and does not indicate or imply that the referred device or element must have a specific orientation, be constructed and operated in a specific orientation, and therefore should not be understood as limiting the embodiments of the present application.

In the description of the embodiments of the present application, unless otherwise clearly specified and limited, the technical terms "mounted", "connected", "coupled", "fixed" and the like should be understood in a broad sense, for example, it may be a fixed connection or a detachable connection, or integrated; it may also be a mechanical connection or an electrical connection; it may be directly connected or indirectly connected through an intermediary, and it may be the internal communication or interaction relationship of two elements. For those of ordinary skill in the art, the specific meanings of the above terms in the embodiments of the present application can be understood according to specific situations.

At present, from the development of the market situation, the application of vehicles is becoming more and more widespread. Vehicles include vehicle body structures, and as the application range of vehicles continues to expand, the market demand for vehicle body structures is also continuously increasing.

In the related art, the vehicle body structure of a vehicle includes a plurality of installation parts such as the body, front and rear surrounds, front and rear doors, and battery packs. During actual assembly, the plurality of installation parts need to be installed on the body according to their structural layout, which has disadvantages such as high assembly difficulty and low production efficiency.

In order to alleviate the problems of high assembly difficulty and low production efficiency, the vehicle body may be divided into an upper vehicle body and an underbody, next, the battery pack is integrated onto the underbody, and then the underbody and the upper vehicle body are connected. However, after the battery pack has a problem, when disassembling the battery pack in the whole vehicle state, the upper vehicle body and the underbody need to be disassembled, and then the front and rear ends of the battery pack need to be disassembled, the operation is complex, the disassembly man-hours are high, and the maintenance cost is high.

Based on the above considerations, in order to solve the problems of complex disassembly and assembly operations of the battery pack, high disassembly man-hours, high maintenance costs, and not conducive to after-sales maintenance, in the present application, an underbody is designed. By configuring the underbody to include a front cabin assembly, a battery assembly and a rear cabin assembly, the battery assembly is integrated into the underbody, which helps to reduce the number of parts and reduce the total weight of the vehicle body structure, and by configuring the battery assembly to be independently detachable relative to the front cabin assembly and the rear cabin assembly, the battery assembly is allowed to be independently detached in a manner away from the upper vehicle body. Therefore, when the battery assembly needs maintenance and replacement, the battery assembly can be independently detached for maintenance and replacement without disassembling the upper vehicle body, the front cabin assembly, and the rear cabin assembly, thereby improving the convenience of disassembly and assembly, which helps to improve the efficiency of replacement and maintenance and improve the user experience.

In the background of increasing demand for vehicles, the battery assembly of the underbody of the present application has higher disassembly and assembly convenience, which helps to improve the efficiency of replacement and maintenance and improve the user experience.

The following embodiments are described by taking the vehicle 1000 as an example in one embodiment of the present application for the convenience of explanation.

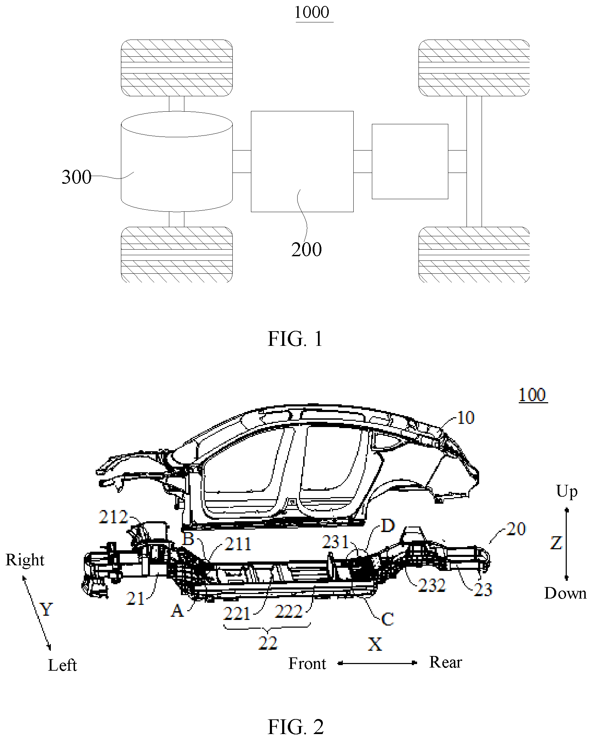

Referring to FIG. 1, FIG. 1 is a schematic structural diagram of the vehicle 1000 according to some embodiments of the present application. The vehicle 1000 may be a fuel vehicle, a gas vehicle or a new energy vehicle, and the new energy vehicle may be a battery electric vehicle, a hybrid electric vehicle, or an extended-range electric vehicle, or the like. The vehicle 1000 includes a vehicle body structure 100, where the vehicle body structure 100 includes an upper vehicle body 10 and an underbody 20, the underbody 20 includes a front cabin assembly 21, a battery assembly 22, and a rear cabin assembly 23, the front cabin assembly 21 is configured to play a role in transmitting front collision loads, and the rear cabin assembly 23 has an important role in placing a spare tire and reducing fuel tank damage and minimizing passenger injury through its own deformation during a rear collision.

The battery assembly 22 refers to a physical module that includes one or more battery cells to provide higher voltage and capacity. For example, the battery assembly 22 mentioned in the present application may include a battery module, a battery pack, or the like. Some battery assemblies 22 may include a case 221 for encapsulating one or more battery cells or battery modules. The case 221 can reduce or avoid the influence of liquids or other foreign objects on the charging or discharging of the battery cells. The battery cells may be used for power supply of the vehicle 1000. For example, the battery cells may serve as the operating power source of the vehicle 1000. The vehicle 1000 may further include a controller 200 and a motor 300, the controller 200 is configured to control the battery cells to supply power to the motor 300, for example, for the operating power requirements of starting, navigation and running of the vehicle 1000.

The structure of the case 221 may be flexibly set. For example, in some embodiments, the case 221 may include a first housing and a second housing, and the first housing and the second housing are snapped together to form a sealed case 221. In some other embodiments, the case 221 includes a frame body with an upper end opening and a lower end opening, where the frame body cooperates with other structures of the vehicle 1000 to form a sealed structure. In still some other embodiments, the case 221 includes one of an upper cover body and a lower cover body and a frame body, where the upper cover body is configured to cover the upper end opening of the frame body, and the lower cover body is configured to cover the lower end opening of the frame body, such that the case 221 has an end opening, and the end opening can cooperate with other structures of the vehicle 1000 to form a sealed structure. All of these are within the protection scope of the present application.

The battery cells may include lithium-ion secondary batteries, lithium-ion primary batteries, lithium-sulfur batteries, sodium-lithium ion batteries, sodium ion batteries or magnesium ion batteries, and the like, and the embodiments of the present application do not limit thereto. The battery cells may be in the form of cylinders, flats, cuboids or other shapes, or the like, and the embodiments of the present application do not limit thereto. Battery cells are generally classified into three types according to packaging methods: cylindrical battery cells, prismatic battery cells, and pouch battery cells, and the embodiments of the present application do not limit thereto.

For example, the battery cell may include a housing, an electrode assembly and an electrolyte, and the housing is configured to accommodate the electrode assembly and the electrolyte. The electrode assembly is composed of a positive electrode sheet, a negative electrode sheet, and a separator. The battery cell mainly works by moving metal ions between the positive electrode sheet and the negative electrode sheet.

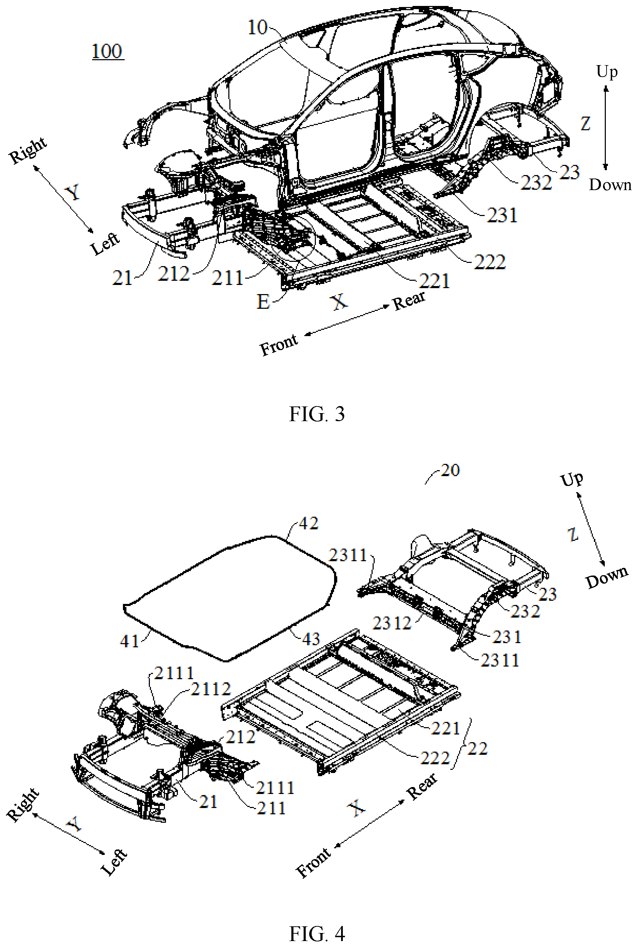

According to some embodiments of the present application, an embodiment of the present application provides an underbody 20. Referring to FIG. 2 to FIG. 4, FIG. 2 is a schematic diagram of the vehicle body structure 100 according to an embodiment of the present application, FIG. 3 is an exploded structural schematic view of the vehicle body structure 100 according to some embodiments of the present application, and FIG. 4 is an exploded structural schematic view of the underbody 20 according to some embodiments of the present application.

The orientations of upper, lower, front, rear, left, right, and the like are all based on the orientation of the vehicle 1000, that is, the direction from the front of the vehicle to the rear of the vehicle is the front-to-rear direction, and the direction from the roof to the bottom guard plate is the top-to-bottom direction, and the seat of the main driver and the seats of the passengers are arranged along the left-right direction. For example, a front-rear direction (that is, length direction) of the vehicle 1000 is direction X, a left-right direction (that is, width direction) of the vehicle 1000 is direction Y, and an up-down direction (that is, height direction) of the vehicle 1000 is direction Z.

Referring to FIG. 2 to FIG. 4, the underbody 20 includes: a front cabin assembly 21, a battery assembly 22, and a rear cabin assembly 23, where the front cabin assembly 21 is provided with a first connecting portion 211 and a first upper vehicle body connecting portion 212 that are spaced apart from each other, the rear cabin assembly 23 is provided with a second connecting portion 231 and a second upper vehicle body connecting portion 232 that are spaced apart from each other, the front cabin assembly 21, the rear cabin assembly 23 and the battery assembly 22 are configured such that the front cabin assembly 21 and the rear cabin assembly 23 are detachably connected to the battery assembly 22 by means of the first connecting portion 211 and the second connecting portion 231, and the battery assembly 22 is allowed to be independently detached in a manner away from an upper vehicle body 10.

The "manner away from the upper vehicle body 10" includes but is not limited to: in the up-down direction, the battery assembly 22 moves downward away from the upper vehicle body 10, or in the left-right direction, the battery assembly 22 moves left or right away from the upper vehicle body 10.

It should be noted that both the first upper vehicle body connecting portion 212 and the second upper vehicle body connecting portion 232 are suitable for detachable connection to the upper vehicle body 10.

The "first connecting portion 211 and the first upper vehicle body connecting portion 212 that are spaced apart from each other" means that when the first connecting portion 211 and the first upper vehicle body connecting portion 212 are respectively connected to the battery assembly 22 and the upper vehicle body 10, the connection manner of the first connecting portion 211 and the connection manner of the first upper vehicle body connecting portion 212 do not interfere with each other. The first connecting portion 211 and the first upper vehicle body connecting portion 212 may be constructed as different sheet metal parts, or the first connecting portion 211 and the first upper vehicle body connecting portion 212 may be constructed as different regions of the same sheet metal part, which is not limited herein.

The "second connecting portion 231 and the second upper vehicle body connecting portion 232 that are spaced apart from each other" means that when the second connecting portion 231 and the second upper vehicle body connecting portion 232 are respectively connected to the battery assembly 22 and the upper vehicle body 10, the connection manner of the second connecting portion 231 and the connection manner of the second upper vehicle body connecting portion 232 do not interfere with each other. The second connecting portion 231 and the second upper vehicle body connecting portion 232 may be constructed as different sheet metal parts, or the second connecting portion 231 and the second upper vehicle body connecting portion 232 may be constructed as different regions of the same sheet metal part, which is not limited herein.

The detachable cooperation manner of the first connecting portion 211 of the front cabin assembly 21 and the battery assembly 22 being detachably connected includes but is not limited to clearance fit, abutment, snap-fit, adhesion, and bolt connection. Similarly, the detachable cooperation manner of the second connecting portion 231 of the rear cabin assembly 23 and the battery assembly 22 as well as the battery assembly 22 and the upper vehicle body 10 includes but is not limited to clearance fit, abutment, snap-fit, adhesion, and bolt connection.

The connection manner between the first upper vehicle body connecting portion 212 and the upper vehicle body 10 includes but is not limited to welding, bolt connection, snap-fit, and adhesion. Similarly, the connection manner between the second upper vehicle body connecting portion 232 and the upper vehicle body 10 includes but is not limited to welding, bolt connection, snap-fit, and adhesion.

For example, the first upper vehicle body connecting portion 212 and the second upper vehicle body connecting portion 232 are each connected to the upper vehicle body 10 through bolts, where a portion of the bolts extend from the inner side of the upper vehicle body 10 toward the outside of the vehicle to connect the first upper vehicle body connecting portion 212 and/or the second upper vehicle body connecting portion 232 to the upper vehicle body 10, and another portion of the bolts extend from the outside of the vehicle toward the inner side of the upper vehicle body 10 to connect the first upper vehicle body connecting portion 212 and/or the second upper vehicle body connecting portion 232 to the upper vehicle body 10.

For example, the first connecting portion 211 and the second connecting portion 231 are each connected to the battery assembly 22 through corresponding bolts, and the bolts at the first connecting portion 211 do not interfere with the bolts at the first upper vehicle body connecting portion 212, and the bolts at the second connecting portion 231 do not interfere with the bolts at the second upper vehicle body connecting portion 232. In this way, during disassembly of the battery assembly 22, the bolts at the first connecting portion 211 and the bolts at the second connecting portion 231 are easier to be disassembled, such that the battery assembly 22 may be independently detached.

The underbody 20 may be provided with a shielding structure to shield the above-mentioned portion of the bolts. The shielding structure may be an automobile carpet or a floor mat or other interior structures to shield the above-mentioned portion of the bolts, avoid interference with other structures, and make them not directly visible, which helps to enhance the flatness of the inner side of the underbody 20.

The upper vehicle body 10 avoids the first connecting portion 211 and the second connecting portion 231, that is, the first connecting portion 211 and the second connecting portion 231 are exposed to the upper vehicle body 10. For example, in a distribution direction of the upper vehicle body 10 and the underbody 20, a projection of the first connecting portion 211 does not overlap with a projection of the upper vehicle body 10, and in a distribution direction of the upper vehicle body 10 and the underbody 20, a projection of the second connecting portion 231 does not overlap with a projection of the upper vehicle body 10, that is, the upper vehicle body 10 does not shield the first connecting portion 211 and the second connecting portion 231.

Thus, when the battery assembly 22 needs maintenance and replacement, since the upper vehicle body 10 does not shield the first connecting portion 211 and the second connecting portion 231, the operator can independently detach the battery assembly 22 in a manner away from the upper vehicle body 10 for maintenance and replacement without disassembling the upper vehicle body 10, the front cabin assembly 21, and the rear cabin assembly 23, thereby improving the convenience of disassembly and assembly, which helps to improve the efficiency of replacement and maintenance and improve the user experience.

For example, when the battery assembly 22 needs to be detached, the battery assembly 22 may be detached only while keeping the front cabin assembly 21 and the rear cabin assembly 23 connected to the upper vehicle body 10. For example, in the embodiment where the battery assembly 22 is directly connected to the front cabin assembly 21 and the rear cabin assembly 23 and abuts the upper vehicle body 10, the connection between the battery assembly 22 and the front cabin assembly 21 and the connection between the battery assembly 22 and the rear cabin assembly 23 may be released while keeping the connections of the front cabin assembly 21 and the rear cabin assembly 23 to the upper vehicle body 10, so as to facilitate the separation of the battery assembly 22 from the upper vehicle body 10. For another example, in the embodiment where the battery assembly 22 is connected to the upper vehicle body 10 through fasteners, the connection between the battery assembly 22 and the upper vehicle body 10 may be released without affecting the connections of the front cabin assembly 21 and the rear cabin assembly to the upper vehicle body 10, so as to facilitate the separation of the battery assembly 22 from the upper vehicle body 10.

Certainly, in the embodiment where the front cabin assembly 21 is detachable, when detaching the front cabin assembly 21, the front cabin assembly 21 may be independently detachable, or detached together with the battery assembly 22, or detached together with the battery assembly 22 and the rear cabin assembly 23; in the embodiment where the rear cabin assembly 23 is detachable, when detaching the rear cabin assembly 23, the rear cabin assembly 23 may be independently detachable, or detached together with the battery assembly 22, or detached together with the battery assembly 22 and the front cabin assembly 21, all of which are within the protection scope of the present application.

According to the underbody 20 of the embodiments of the present application, by configuring the underbody 20 to include the front cabin assembly 21, the battery assembly 22 and the rear cabin assembly 23, the battery assembly 22 is integrated into the underbody 20, which helps to reduce the number of parts and reduce the total weight of the underbody 20, and by configuring the battery assembly 22 to be independently detachable relative to the front cabin assembly 21 and the rear cabin assembly 23, the battery assembly 22 is allowed to be independently detached in a manner away from the upper vehicle body 10. Thus, when the battery assembly 22 needs maintenance and replacement, since the upper vehicle body 10 does not shield the first connecting portion 211 and the second connecting portion 231, the operator can independently detach the battery assembly 22 for maintenance and replacement without disassembling the upper vehicle body 10, thereby improving the convenience of disassembly and assembly, which helps to improve the efficiency of replacement and maintenance and improve the user experience.

In some embodiments, referring to FIG. 4, the first connecting portion 211 includes front side portion fixing portions 2111 and a front top portion fixing portion 2112, where left and right sides of the front top portion fixing portion 2112 are each provided with the front side portion fixing portion 2111, the front side portion fixing portions 2111 are detachably connected to the battery assembly 22, and the front top portion fixing portion 2112 is detachably connected to the battery assembly 22.

Thus, by configuring the first connecting portion 211 to include the front side portion fixing portions 2111 and the front top portion fixing portion 2112, when the first connecting portion 211 is connected to the battery assembly 22, the front side portion fixing portions 2111 and the front top portion fixing portion 2112 may be respectively detachably connected to the battery assembly 22, thereby enhancing the connection area between the front cabin assembly 21 and the battery assembly 22, so as to enhance the connection stability between the front cabin assembly 21 and the battery assembly 22.

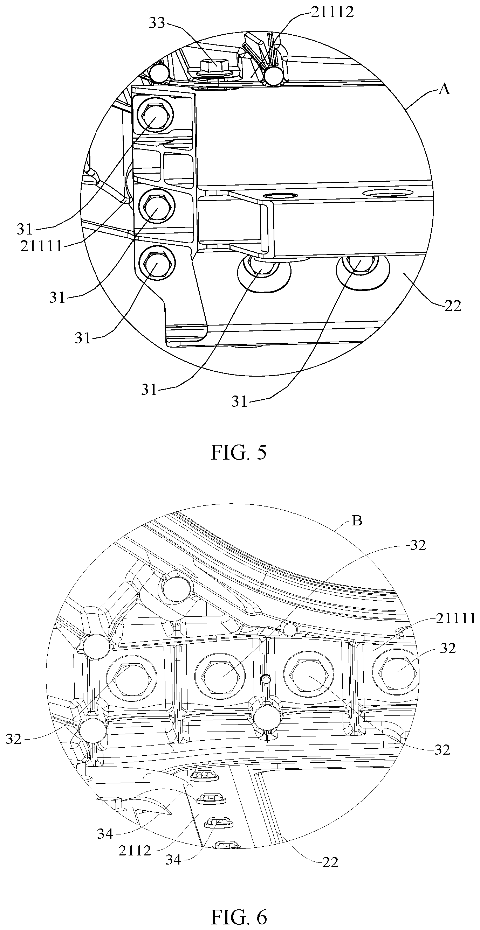

In some embodiments, referring to FIG. 5 and FIG. 6, FIG. 5 is an enlarged view at A in FIG. 2, and FIG. 6 is an enlarged view at B in FIG. 2. A first portion 21111 of the front side portion fixing portion 2111 is located on an inner side of the battery assembly 22; and the underbody 20 further includes a first fastener 31 and a second fastener 32, where the first fastener 31 passes through the battery assembly 22 and is fixed to the first portion 21111, and the second fastener 32 passes through the first portion 21111 and is fixed to the battery assembly 22.

The "inner side" refers to a side close to the interior of the vehicle in the left-right direction, and correspondingly, the "outer side" refers to a side close to the exterior of the vehicle in the left-right direction.

Thus, by configuring the first portion 21111 of the front side portion fixing portion 2111 on the inner side of the battery assembly 22, the battery assembly 22 is located on the outer side of the first portion 21111, that is, the front side portion fixing portion 2111 and the battery assembly 22 are distributed in the left-right direction of the vehicle 1000. In this way, when the battery assembly 22 needs maintenance and replacement, after the connection structure of the battery assembly 22 is released, the battery assembly 22 can directly move on the outer side of the first portion 21111 to separate from the first portion 21111, so as to avoid interference between the disassembly movement of the first portion 21111 and the battery assembly 22.

The first fastener 31 passes through the battery assembly 22 and is fixed to the first portion 21111, and the second fastener 32 passes through the first portion 21111 and is fixed to the battery assembly 22, that is, the first fastener 31 is substantially inserted from outside to inside along the left-right direction to achieve the connection between the first portion 21111 and the battery assembly 22, and the second fastener 32 is substantially inserted from inside to outside along the left-right direction to achieve fixing between the first portion 21111 and the battery assembly 22, thereby enhancing the connection stability between the first portion 21111 and the battery assembly 22 while preventing the upper vehicle body from shielding the fastening positions of the first fastener 31 or the second fastener 32, so as to improve the convenience of disassembly and assembly of the battery assembly 22 and the first portion 21111.

It should be noted that both the first fastener 31 and the second fastener 32 may be constructed as bolts, or connecting posts or other structures, which is not limited herein, where when the first fastener 31 and the second fastener 32 are constructed as bolts, a nut is correspondingly embedded in the first portion 21111 or the battery assembly 22.

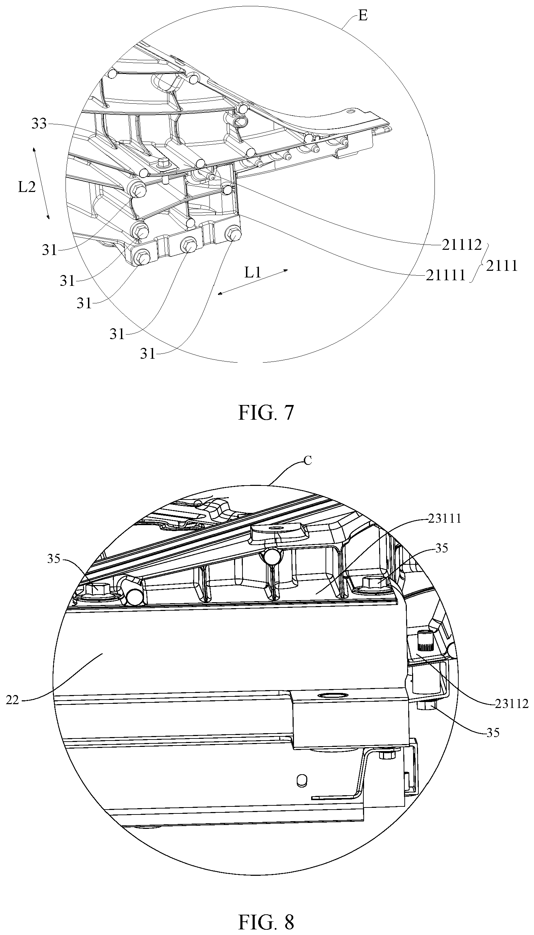

In some embodiments, referring to FIG. 5 and FIG. 7, FIG. 7 is an enlarged view at E in FIG. 3. The first fastener 31 is provided in plural, a portion of the first fasteners 31 are spaced apart along a first direction L1, another portion of the first fasteners 31 are spaced apart along a second direction L2, and the first direction and the second direction form an included angle.

For example, the first direction is the front-rear direction of the vehicle, that is, direction X, and the second direction is the height direction of the vehicle, that is, direction Z, such that a portion of the first fasteners 31 and another portion of the first fasteners 31 are spaced apart from each other along different directions, such that the plurality of first fasteners 31 can fix the first portion 21111 and the battery assembly 22 in two directions (direction X and direction Z), thereby enhancing the connection strength between the first portion 21111 and the battery assembly 22 in direction X and direction Z, and further enhancing the connection stability thereof.

In some embodiments, referring to FIG. 5, a second portion 21112 of the front side portion fixing portion 2111 is located above the battery assembly 22; and the underbody 20 further includes a third fastener 33, where the third fastener 33 sequentially passes through the second portion 21112 and is fixed to the battery assembly 22.

Thus, by configuring the second portion 21112 of the front side portion fixing portion 2111 to be located above the battery assembly 22, when the battery assembly 22 needs maintenance and replacement, after the connection structure of the battery assembly 22 is released, the battery assembly 22 can directly move downward below the second portion 21112 to separate from the second portion 21112, so as to avoid interference between the disassembly movement of the second portion 21112 and the battery assembly 22. The third fastener 33 passes through the second portion 21112 and is fixed to the battery assembly 22, that is, the fixing direction of the third fastener 33 is approximately an up-down direction, thereby enhancing the connection stability between the second portion 21112 and the battery assembly 22 in the up-down direction (that is, direction Z).

It should be noted that the third fastener 33 may be constructed as a bolt, a connecting post, or other structures, which is not limited herein. When the third fastener 33 is constructed as a bolt, a nut is correspondingly embedded in the battery assembly 22.

In some embodiments, referring to FIG. 6, the front top portion fixing portion 2112 is located above the battery assembly 22; and the underbody 20 further includes a fourth fastener 34, where the fourth fastener 34 passes through the front top portion fixing portion 2112 and is fixed to the battery assembly 22.

Thus, by configuring the front top portion fixing portion 2112 to be located above the battery assembly 22, when the battery assembly 22 needs maintenance and replacement, after the connection structure of the battery assembly 22 is released, the battery assembly 22 can directly move downward below the front top portion fixing portion 2112 to separate from the front top portion fixing portion 2112, so as to avoid interference between the disassembly movement of the front top portion fixing portion 2112 and the battery assembly 22. The fourth fastener 34 passes through the front top portion fixing portion 2112 and is fixed to the battery assembly 22, that is, the fixing direction of the fourth fastener 34 is approximately the up-down direction, thereby enhancing the connection stability between the front top portion fixing portion 2112 and the battery assembly 22 in the up-down direction.

For example, the fourth fastener 34 may be constructed as a bolt, a connecting post, or other structures, which is not limited herein. When the fourth fastener 34 is constructed as a bolt, a nut is correspondingly embedded in the battery assembly 22.

In some embodiments, the second connecting portion 231 includes a rear side portion fixing portion 2311. Referring to FIG. 8, FIG. 8 is an enlarged view at C in FIG. 2.

The rear side portion fixing portion 2311 includes a third portion 23111 and a fourth portion 23112, where the third portion 23111 is located above the fourth portion 23112, and both the third portion 23111 and the fourth portion 23112 are located above the battery assembly 22; and the underbody 20 further includes a plurality of fifth fasteners 35, where a portion of the fifth fasteners 35 pass through the third portion 23111 and are fixed to the battery assembly 22, and another portion of the fifth fasteners 35 pass through the fourth portion 23112 and are fixed to the battery assembly 22.

Thus, by configuring both the third portion 23111 and the fourth portion 23112 to be located above the battery assembly 22, when the battery assembly 22 needs maintenance and replacement, after the connection structure of the battery assembly 22 is released, the battery assembly 22 can directly move downward below the third portion 23111 and the fourth portion 23112 to separate from the third portion 23111 and the fourth portion 23112, so as to avoid interference between the disassembly movement of the third portion 23111 and the fourth portion 23112 and the battery assembly 22.

A portion of the fifth fasteners 35 and another portion of the fifth fasteners 35 respectively pass through the third portion 23111 and the fourth portion 23112 and are fixed to the battery assembly 22, and the third portion 23111 is located above the fourth portion 23112, such that the plurality of fifth fasteners 35 can fix the rear side portion fixing portion 2311 and the battery assembly 22 at two heights, thereby enhancing the connection strength between the rear side portion fixing portion 2311 and the battery assembly 22, and further enhancing the connection stability thereof.

For example, the fifth fastener 35 may be constructed as a bolt, a connecting post, or other structures, which is not limited herein, where when the fifth fastener 35 is constructed as a bolt, a nut is correspondingly embedded in the battery assembly 22.

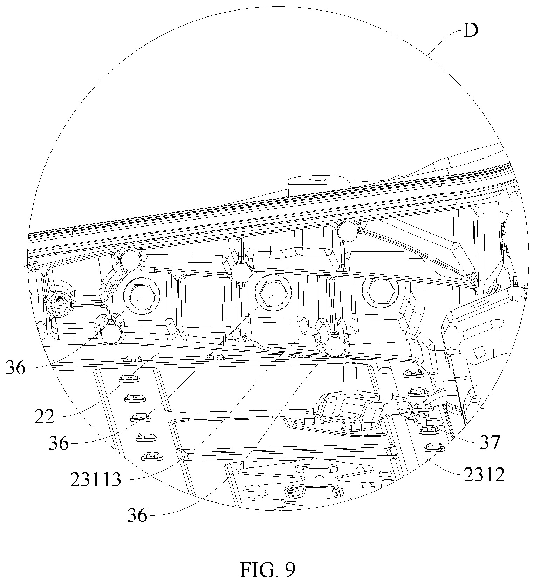

In some embodiments, referring to FIG. 9, FIG. 9 is an enlarged view at D in FIG. 2.

The rear side portion fixing portion 2311 further includes a fifth portion 23113, where the fifth portion 23113 is located on an inner side of the battery assembly 22; and the underbody 20 further includes a sixth fastener 36, where the sixth fastener 36 passes through the fifth portion 23113 and is fixed to the battery assembly 22.

Thus, by configuring the fifth portion 23113 on the inner side of the battery assembly 22, the battery assembly 22 is located on the outer side of the fifth portion 23113, that is, the fifth portion 23113 and the battery assembly 22 are distributed in the left-right direction of the vehicle 1000. In this way, when the battery assembly 22 needs maintenance and replacement, after the connection structure of the battery assembly 22 is released, the battery assembly 22 can directly move on the outer side of the fifth portion 23113 to separate from the fifth portion 23113, so as to avoid interference between the disassembly movement of the fifth portion 23113 and the battery assembly 22.

The sixth fastener 36 passes through the fifth portion 23113 and is fixed to the battery assembly 22, that is, the sixth fastener 36 is substantially inserted from inside to outside along the left-right direction to achieve fixing between the fifth portion 23113 and the battery assembly 22, thereby enhancing the connection stability between the fifth portion 23113 and the battery assembly 22 in the left-right direction while avoiding the upper vehicle body from shielding the fastening position of the sixth fastener 36, so as to improve the convenience of disassembly and assembly of the battery assembly 22 and the fifth portion 23113.

For example, the sixth fastener 36 may be constructed as a bolt, a connecting post, or other structures, which is not limited herein. When the sixth fastener 36 is constructed as a bolt, a nut is correspondingly embedded in the battery assembly 22.

In some embodiments, referring to FIG. 9, the second connecting portion 231 further includes a rear top portion fixing portion 2312, where the rear side portion fixing portion 2311 is provided on each of two sides of the rear top portion fixing portion 2312; the rear top portion fixing portion 2312 is located above the battery assembly 22; and the underbody 20 further includes a seventh fastener 37, where the seventh fastener 37 passes through the rear top portion fixing portion 2312 and is fixed to the battery assembly 22.

Thus, by configuring the rear top portion fixing portion 2312 to be located above the battery assembly 22, the battery assembly 22 is located below the rear top portion fixing portion 2312, that is, the rear top portion fixing portion 2312 and the battery assembly 22 are distributed in the up-down direction of the vehicle 1000. In this way, when the battery assembly 22 needs maintenance and replacement, after the connection structure of the battery assembly 22 is released, the battery assembly 22 can directly move downward below the rear top portion fixing portion 2312 to separate from the rear top portion fixing portion 2312, so as to avoid interference between the disassembly movement of the rear top portion fixing portion 2312 and the battery assembly 22.

The seventh fastener 37 passes through the rear top portion fixing portion 2312 and is fixed to the battery assembly 22, that is, the seventh fastener 37 is substantially inserted from top to bottom along the up-down direction to achieve fixing between the rear top portion fixing portion 2312 and the battery assembly 22, thereby enhancing the connection stability between the rear top portion fixing portion 2312 and the battery assembly 22 in the up-down direction while avoiding the upper vehicle body from shielding the fastening position of the seventh fastener 37, so as to improve the convenience of disassembly and assembly of the battery assembly 22 and the rear top portion fixing portion 2312.

For example, the seventh fastener 37 may be constructed as a bolt, a connecting post, or other structures, which is not limited herein. When the seventh fastener 37 is constructed as a bolt, a nut is correspondingly embedded in the battery assembly 22.

In some embodiments, referring to FIG. 4, the underbody 20 further includes a first seal 41 and a second seal 42, where the first seal 41 seals a gap between the front cabin assembly 21 and the battery assembly 22, and the second seal 42 seals a gap between the rear cabin assembly 23 and the battery assembly 22.

Thus, the provision of the first seal 41 can improve the sealing between the front cabin assembly 21 and the battery assembly 22, and the provision of the second seal 42 can improve the sealing between the rear cabin assembly 23 and the battery assembly 22.

The specific structures of the first seal 41 and the second seal 42 may be flexibly set, and at least one of them may be sealing glue, sealing rubber strips, or the like, which is not limited herein.

In some embodiments, the first seal 41 and/or the second seal 42 is an adhesive member, and the adhesive member is configured to cooperate with the battery assembly 22.

Thus, the first seal 41 is an adhesive member, which can enhance the connection reliability between the front cabin assembly 21 and the battery assembly 22 while ensuring the sealing performance at the connection between the front cabin assembly 21 and the battery assembly 22, and/or the second seal 42 is an adhesive member, which can enhance the connection reliability between the rear cabin assembly 23 and the battery assembly 22 while ensuring the sealing performance at the connection between the rear cabin assembly 23 and the battery assembly 22, and the structure is simpler, which facilitates cost reduction.

In some embodiments, the battery assembly 22 includes a case 221 and battery cells disposed in the case 221, where the case 221 includes a sill beam 222, and the front cabin assembly 21, the rear cabin assembly 23 and the upper vehicle body 10 are both detachably connected to the case 221.

Thus, the case 221 can provide shielding and protection for the battery cells. The case 221 includes a sill beam 222, and the front cabin assembly 21, the rear cabin assembly 23 and the upper vehicle body 10 are separately detachably connected to the case 221, such that the case 221 serving as the vehicle body floor is integrated with the front cabin assembly 21 and the rear cabin assembly 23 to form the underbody 20, thereby achieving the design of integrating the case 221 into the underbody 20.

For example, the case 221 includes a frame body, and the frame body can provide shielding and protection for the battery cells. The components used to install the battery assembly 22 may be connected to the frame body, such as at least one of the upper vehicle body 10, the front cabin assembly 21, and the rear cabin assembly 23 is connected to the frame body, to install the battery assembly 22 from the edge, which helps to improve the installation stability of the battery assembly 22.

In addition, the case 221 includes a sill beam 222. The sill beam 222 is a very important protective component of the vehicle 1000, which can effectively resist external intrusion during side collisions of the vehicle 1000, protect the integrity of the occupant compartment, and reduce injuries to occupants in the vehicle.

The frame body includes the sill beam 222. In other words, the sill beam 222 is connected to the frame wall of the frame body to improve the overall structural strength of the case 221; or the sill beam 222 directly serves as the frame wall of the frame body, so as to reduce the number of parts of the battery assembly 22, reduce the space occupied by the case 221 to improve the energy density, and reduce the overall vehicle weight.

It should be noted that the frame body has an upper opening and a lower opening. The upper opening may be covered by the upper vehicle body 10, or may be covered by other structures of the battery assembly 22; and the lower opening may be covered by components such as a bottom guard plate, or may be covered by other structures of the battery assembly 22, all of which can enable the battery cells to be disposed in a relatively enclosed space.

For example, in some embodiments, the case 221 further includes an upper cover body, where the upper cover body covers the upper opening of the frame body, and the upper cover body includes a front floor. In other words, the front floor is integrated into the battery assembly 22 and is assembled and disassembled together with the battery assembly 22. In this way, the upper opening may be covered by the upper cover body before the battery assembly 22 cooperates with the upper vehicle body 10, which helps to improve the sealing performance and operational convenience; and also helps to reduce the number of parts of the upper cover body. For example, the front floor directly covers the upper opening without other cover structures, so as to reduce the space and weight occupied by the case 221 and improve the energy density.

In some embodiments, the case 221 further includes a lower cover body, where the lower cover body covers the lower opening of the frame body, and the lower cover body includes a bottom guard plate. In other words, the bottom guard plate is integrated into the battery assembly 22 and is assembled and disassembled together with the battery assembly 22. According to requirements, the lower opening may be covered by the lower cover body before the battery assembly 22 cooperates with the upper vehicle body 10, which helps to improve the sealing performance and operational convenience, and also helps to reduce the number of parts of the lower cover body. For example, the bottom guard plate directly covers the lower opening without other cover structures, so as to reduce the space and weight occupied by the case 221 and improve the energy density.

According to a second aspect, the present application provides a vehicle body structure 100, including an upper vehicle body 10 and an underbody 20, where the underbody 20 is the underbody 20 according to any one of the above embodiments, and the upper vehicle body 10 avoids the first connecting portion 211 and the second connecting portion 231.

The upper vehicle body 10 avoids the first connecting portion 211 and the second connecting portion 231, that is, the first connecting portion 211 and the second connecting portion 231 are exposed to the upper vehicle body 10. For example, in a distribution direction of the upper vehicle body 10 and the underbody 20, a projection of the first connecting portion 211 does not overlap with a projection of the upper vehicle body 10, and in a distribution direction of the upper vehicle body 10 and the underbody 20, a projection of the second connecting portion 231 does not overlap with a projection of the upper vehicle body 10, that is, the upper vehicle body 10 does not shield the first connecting portion 211 and the second connecting portion 231. That is, the upper vehicle body 10 does not shield the first connecting portion 211 and the second connecting portion 231.

Thus, when the battery assembly 22 needs maintenance and replacement, since the upper vehicle body 10 does not shield the first connecting portion 211 and the second connecting portion 231, the operator can independently detach the battery assembly 22 for maintenance and replacement without disassembling the upper vehicle body 10, the front cabin assembly 21, and the rear cabin assembly 23, thereby improving the convenience of disassembly and assembly, which helps to improve the efficiency of replacement and maintenance and improve the user experience.

In some embodiments, the vehicle body structure 100 further includes a third seal 43, where the third seal 43 seals a gap between the battery assembly 22 and the upper vehicle body 10.

Thus, by configuring the third seal 43, the sealing at the connection between the upper vehicle body 10 and the battery assembly 22 can be improved.

In some embodiments, referring to FIG. 4, the first seal 41 and/or the second seal 42 is connected to the third seal 43. Thus, the sealing gap can be reduced and the sealing performance can be improved.

For example, in some embodiments, referring to FIG. 4, the first seal 41 is an adhesive glue, and the adhesive glue is adhesively fitted with the battery assembly 22 and the front cabin assembly 21. The adhesive glue has adhesiveness, which can achieve better sealing performance, and is not easy to misalign during assembly to affect the sealing performance. When the battery assembly 22 needs to be detached, the adhesive glue can be removed by tearing, without affecting the detachment of the battery assembly 22.

Moreover, in the embodiment where the first seal 41 is connected to the second seal 42 and/or the third seal 43, the adhesiveness of the adhesive glue may be used to achieve the connection, which helps to improve the sealing at the connection.

In some specific embodiments, the adhesive glue may be a weak adhesive glue, that is, an adhesive glue with relatively weak adhesiveness, which can achieve sealing while reducing the difficulty of tearing and removing. For example, the weak adhesive glue may be butyl rubber clay.

In the embodiment where the third seal 41 is an elastic sealing ring or adhesive glue, the types of the second seal 42 and the first seal 41 may be the same or different. For example, the second seal 42 and the first seal 41 are both elastic sealing rings or are both adhesive glues, for example, one of the second seal 42 and the first seal 41 may be an elastic sealing ring, and the other two are adhesive glues or the like.

In some specific embodiments, at least one of the first seal 41 and the second seal 42 may be an adhesive glue, and the type of the adhesive glue is the same as the type of the adhesive glue of the third seal 43. For example, the first seal 41 and the second seal 42 are both butyl rubber clay. Adhesives of the same type have better compatibility, which can improve the sealing at the connection, and facilitate improving the sealing performance after disassembly and assembly of the battery assembly 22.

In some embodiments, the third seal 43 is an elastic sealing ring, and the elastic sealing ring is in tight fit with the battery assembly 22 and the upper vehicle body 10.

The elastic sealing ring is a sealing ring that can undergo elastic deformation, for example, it may be made of rubber, silicone, or the like. Thus, the pressure formed by the cooperation between the battery assembly 22 and the upper vehicle body 10 is used to compress the elastic sealing ring, which helps to improve the sealing performance. When the battery assembly 22 needs to be detached, the fixing structure of the battery assembly 22 is released to cancel the compression force on the elastic sealing ring, and the elastic sealing ring can separate from the battery assembly 22 and the upper vehicle body 10, making the disassembly and assembly of the battery assembly 22 convenient.

In some embodiments, in the left-right direction, a portion of the battery assembly 22 is detachably connected to the upper vehicle body 10.

The "left-right direction" refers to a width direction of the vehicle 1000, that is, direction Y.

The upper vehicle body 10 and the underbody 20 are usually distributed in the up-down direction, that is, a height direction Z of the vehicle 1000, meaning that, the upper vehicle body 10 and the battery assembly 22 are distributed in the up-down direction. Therefore, by configuring a portion of the battery assembly 22 to be detachably connected to the upper vehicle body 10 in the left-right direction Y, during assembly and disassembly of the battery assembly 22, the disassembly of the battery assembly 22 and the upper vehicle body 10 can be achieved in the left-right direction Y, so as to avoid the upper vehicle body 10 from obstructing the assembly and disassembly process. Since the front cabin assembly 21 and the rear cabin assembly 22 are distributed on the front and rear sides of the battery assembly 22, the disassembly of the battery assembly 22 and the upper vehicle body 10 in the left-right direction Y can also avoid interference with the front cabin assembly 21 or the rear cabin assembly 23 during the disassembly process, so as to reduce the difficulty of assembling and disassembling the battery assembly 22.

In some embodiments, in the left-right direction, a portion of the battery assembly 22 is detachably connected to the front cabin assembly 21, and a portion of the battery assembly 22 is detachably connected to the rear cabin assembly 23.

The "left-right direction" refers to a width direction of the vehicle 1000, that is, direction Y.

The front cabin assembly 21 and the rear cabin assembly 22 are distributed on the front and rear sides of the battery assembly 22. Therefore, by configuring a portion of the battery assembly 22 to be detachably connected to the front cabin assembly 21 in the left-right direction Y and a portion to be detachably connected to the rear cabin assembly 22, during assembly and disassembly of the battery assembly 22, the disassembly of the battery assembly 22 from the front cabin assembly 21 and the rear cabin assembly 22 can be achieved in the left-right direction Y, so as to avoid the front cabin assembly 21 and the rear cabin assembly 22 from obstructing the assembly and disassembly process. Since the upper vehicle body 10 and the underbody 20 are usually distributed in the up-down direction, that is, a height direction Z of the vehicle 1000, meaning that, the upper vehicle body 10 and the battery assembly 22 are distributed in the up-down direction, the disassembly of the battery assembly 22 from the front cabin assembly 21 and the rear cabin assembly 22 in the left-right direction Y can also avoid interference with the upper vehicle body 10 during the disassembly process, so as to reduce the difficulty of assembling and disassembling the battery assembly 22.

In any of the above embodiments, the battery assembly 22 and the upper vehicle body 10 are detachably connected in the up-down direction.

The "up-down direction" refers to a height direction of the vehicle 1000, that is, direction Z.

The upper vehicle body 10 and the underbody 20 are usually distributed in the up-down direction, that is, the height direction Z of the vehicle 1000, meaning that, the upper vehicle body 10 and the battery assembly 22 are distributed in the up-down direction. Therefore, by configuring the battery assembly 22 and the upper vehicle body 10 to be detachably connected in the up-down direction, the assembly and disassembly direction of the battery assembly 22 and the upper vehicle body 10 is the same as the distribution direction, thereby facilitating to reduce the setting difficulty of the battery assembly 22.

According to a third aspect, the present application provides a vehicle 1000, including the vehicle body structure 100 according to any one of the above embodiments.

According to some embodiments of the present application, an underbody 20 is provided, including: a front cabin assembly 21, a battery assembly 22, and a rear cabin assembly 23, where the front cabin assembly 21 is provided with a first connecting portion 211 and a first upper vehicle body connecting portion 212 that are spaced apart from each other, the first connecting portion 211 is detachably connected to the battery assembly 22, the rear cabin assembly 23 is provided with a second connecting portion 231 and a second upper vehicle body connecting portion 232 that are spaced apart from each other, the second connecting portion 231 is detachably connected to the battery assembly 22, and the battery assembly 22 is suitable for detachable connection to the upper vehicle body 10; and the first upper vehicle body connecting portion 212 and the second upper vehicle body connecting portion 232 are suitable for being connected to the upper vehicle body 10. Thus, the battery assembly 22 is integrated into the underbody 20, which helps to reduce the number of parts and reduce the total weight of the underbody 20, and by configuring the battery assembly 22 to be independently detachable relative to the front cabin assembly 21 and the rear cabin assembly 23, and the first connecting portion 211 and the first upper vehicle body connecting portion 212 are spaced apart, and the second connecting portion 231 and the second upper vehicle body connecting portion 232 are spaced apart. Therefore, when the battery assembly 22 needs maintenance and replacement, the battery assembly 22 can be independently detached for maintenance and replacement without disassembling the upper vehicle body 10, the front cabin assembly 21, and the rear cabin assembly 23, thereby improving the convenience of disassembly and assembly, which helps to improve the efficiency of replacement and maintenance and improve the user experience.

Finally, it should be noted that: the above embodiments are only used to illustrate the technical solutions of the present application, and are not intended to limit them; although the present application has been described in detail with reference to the foregoing embodiments, those of ordinary skill in the art should understand that: the technical solutions recorded in the foregoing embodiments can still be modified, or some or all of the technical features thereof may be equivalently replaced; these modifications or replacements do not make the essence of the corresponding technical solutions depart from the scope of the technical solutions of the embodiments of the present application, and they should all be covered within the scope of the claims and specification of the present application. In particular, as long as there is no structural conflict, the various technical features mentioned in the various embodiments may be combined in any manner. The present application is not limited to the specific embodiments disclosed in the text, but includes all technical solutions falling within the scope of the claims.

## Claims

1. An underbody, wherein the underbody comprises a front cabin assembly, a battery assembly, and a rear cabin assembly, wherein the front cabin assembly is provided with a first connecting portion and a first upper vehicle body connecting portion that are spaced apart from each other, the rear cabin assembly is provided with a second connecting portion and a second upper vehicle body connecting portion that are spaced apart from each other, the front cabin assembly, the rear cabin assembly, and the battery assembly are configured such that the front cabin assembly and the rear cabin assembly are detachably connected to the battery assembly by means of the first connecting portion and the second connecting portion, and the battery assembly is allowed to be independently detached in a manner away from an upper vehicle body.

2. The underbody according to claim 1, wherein the first connecting portion comprises front side portion fixing portions and a front top portion fixing portion, wherein left and right sides of the front top portion fixing portion are each provided with the front side portion fixing portion, the front side portion fixing portions are detachably connected to the battery assembly, and the front top portion fixing portion is detachably connected to the battery assembly.

3. The underbody according to claim 2, wherein a first portion of the front side portion fixing portion is located on an inner side of the battery assembly; and
the underbody further comprises a first fastener and a second fastener, wherein the first fastener passes through the battery assembly and is fixed to the first portion, and the second fastener passes through the first portion and is fixed to the battery assembly.

4. The underbody according to claim 3, wherein the first fastener is provided in plural, a portion of the first fasteners are spaced apart along a first direction, another portion of the first fasteners are spaced apart along a second direction, and the first direction and the second direction form an included angle.

5. The underbody according to claim 3, wherein a second portion of the front side portion fixing portion is located above the battery assembly; and
the underbody further comprises a third fastener, wherein the third fastener sequentially passes through the second portion and is fixed to the battery assembly.

6. The underbody according to claim 2, wherein the front top portion fixing portion is located above the battery assembly; and
the underbody further comprises a fourth fastener, wherein the fourth fastener passes through the front top portion fixing portion and is fixed to the battery assembly.

7. The underbody according to any one of claims 1 to 6, wherein the second connecting portion comprises a rear side portion fixing portion, wherein the rear side portion fixing portion comprises a third portion and a fourth portion, the third portion is located above the fourth portion, and both the third portion and the fourth portion are located above the battery assembly; and
the underbody further comprises a plurality of fifth fasteners, wherein a portion of the fifth fasteners pass through the third portion and are fixed to the battery assembly, and another portion of the fifth fasteners pass through the fourth portion and are fixed to the battery assembly.

8. The underbody according to claim 7, wherein the rear side portion fixing portion further comprises a fifth portion, wherein the fifth portion is located on an inner side of the battery assembly; and
the underbody further comprises a sixth fastener, wherein the sixth fastener passes through the fifth portion and is fixed to the battery assembly.

9. The underbody according to claim 7, wherein the second connecting portion further comprises a rear top portion fixing portion, wherein the rear side portion fixing portion is provided on each of two sides of the rear top portion fixing portion;
the rear top portion fixing portion is located above the battery assembly; and
the underbody further comprises a seventh fastener, wherein the seventh fastener passes through the rear top portion fixing portion and is fixed to the battery assembly.

10. The underbody according to any one of claims 1 to 9, further comprising a first seal and a second seal, wherein the first seal seals a gap between the front cabin assembly and the battery assembly, and the second seal seals a gap between the rear cabin assembly and the battery assembly.

11. The underbody according to claim 10, wherein the first seal and/or the second seal is an adhesive member, and the adhesive member is configured to cooperate with the battery assembly.

12. The underbody according to any one of claims 1 to 11, wherein the battery assembly comprises a case and battery cells disposed in the case, wherein the case comprises a sill beam, and the front cabin assembly and the rear cabin assembly are both detachably connected to the case.

13. A vehicle body structure, comprising an upper vehicle body and an underbody, wherein the underbody is the underbody according to any one of claims 1 to 12, and the upper vehicle body avoids the first connecting portion and the second connecting portion.

14. The vehicle body structure according to claim 13, further comprising a third seal, wherein the third seal seals a gap between the battery assembly and the upper vehicle body.

15. The vehicle body structure according to claim 13, wherein, in a left-right direction, a portion of the battery assembly is detachably connected to the upper vehicle body.

16. The vehicle body structure according to claim 13, wherein, in a left-right direction, a portion of the battery assembly is detachably connected to the front cabin assembly, and a portion of the battery assembly is detachably connected to the rear cabin assembly.

17. A vehicle, comprising the vehicle body structure according to any one of claims 13 to 16.
